# EUROPÄISCHE PATENTSCHRIFT

(11) **EP 0 319 515 B1**
(45) Veröffentlichungstag und Bekanntmachung des Hinweises auf die Patenterteilung: **25.05.1994**
(21) Anmeldenummer: 88890305.1
(22) Anmeldetag: 01.12.1988
(51) Int. Cl.: B60C 9/18, B60C 9/20

(54) **Fahrzeugreifen**
Vehicle tyres
Bandage pneumatique pour véhicules

(30) Priorität: 02.12.1987 AT 3177/87
(43) Veröffentlichungstag der Anmeldung: 07.06.1989
(73) Patentinhaber: Schmidt, Oskar, A-1010 Wien (AT)
(72) Erfinder: Schmidt, Oskar, A-1010 Wien (AT)
(74) Vertreter: Rippel, Andreas, Dipl.-Ing.

(56) Entgegenhaltungen:
- US-A- 1 415 281
- US-A- 3 449 199
- US-A- 3 830 272

## Beschreibung

Die Erfindung bezieht sich auf einen Fahrzeugreifen, mit einem aus Elastomeren bestehenden Reifenkörper, in dem eine Armierung eingebettet ist, einer Lauffläche und einem darunter verlaufenden Gurt mit ineinander greifenden Gliedern.

Ein derartiger Reifen ist z.B. aus der US-A-3 830 272 bekannt.

Der Gurt von Fahrzeugreifen dient der Aufnahme der auf den Reifenkörper einwirkenden Zugspannungen. Übliche Gurte, auch Gürtel genannt, bestehen aus Korden, insbesondere auch Stahlkorden, die unter Winkel zwischen etwa 0 und 30° zur Reifenlängsachse verlaufen. Die Steifheit der bekannten Gurtkonstruktionen wirkt ungünstig auf den Rollwiderstand der Fahrzeugräder.

Beim Abrollen des Fahrzeugreifens am Boden kommt es an der Aufstandsfläche zu einem Eindrücken des Reifens und damit einer Verkürzung des Umfanges. Da der Gurt in Umfangsrichtung verläuft, erfolgt eine Stauchung desselben. In den Seitenwänden des Reifens führt dies zu einer stehenden Welle, wodurch der Reifen übermässig hoch beansprucht wird.

Die Erfindung hat es sich zum Ziel gesetzt, einen Reifen der eingangs genannten Art zu schaffen, der die aufgezeigten Nachteile nicht aufweist, dessen Gurt demnach die Reifenwandung nicht zusätzlich beansprucht wird und der den Rollwiderstand entscheidend vermindert.

Erreicht wird dieses Ziel dadurch, daß der Gurt aus länglichen, quer zur Umfangsrichtung des Reifens liegenden Drahtwendeln besteht, die miteinander der Länge nach scharnierartig verbunden sind.

Bei einem erfindungsgemässen Fahrzeugreifen ist die oben geschilderte Stauchung nicht mehr möglich, weil die einzelnen Drahtwendeln gegeneinander beweglich sind. Ein erfindungsgemäßer Gurt kann auf an sich bekannten Maschinen verhältnismäßig einfach und mit hoher Genauigkeit hergestellt werden. Die erfindungsgemäße Konstruktion eignet sich auch besonders für eine rationelle Vorfertigung. Auch dessen Anbringung in der der Reifenherstellung dienenden Form bringt keine besonderen Schwierigkeiten mit sich.

Um bei einer gewählten Steigung der Drahtwendeln den Abstand der einzelnen Drähte gering halten zu können, ist es im Rahmen der Erfindung zweckmäßig, wenn die einzelnen Glieder mehrgängig ausgebildet sind. Es ist dabei möglich, daß Glieder verschiedener Mehrgängigkeit abwechselnd miteinander verbunden sind. Dadurch besteht der Gurt aus abwechselnd verschieden breiten Gliedern. Die Steigung der Drahtwendeln nebeneinander liegender Glieder soll gleich sein.

Um im Bereich der größeren Rundungen des Reifens, das ist der Übergangsbereich von der Lauffläche zu den Seitenwänden, das durch den kürzeren Umfang erforderliche Zusammenrücken der einzelnen Glieder zu erreichen, ist es nach einem weiteren Merkmal der Erfindung zweckmäßig, wenn nebeneinander liegende Glieder abwechselnd verschieden lang sind, wobei die kürzeren Glieder nur über den Laufflächenbereich des Reifens reichen. Es ist dabei vorteilhaft, wenn die kürzeren Glieder mehrgängiger als die längeren Glieder sind.

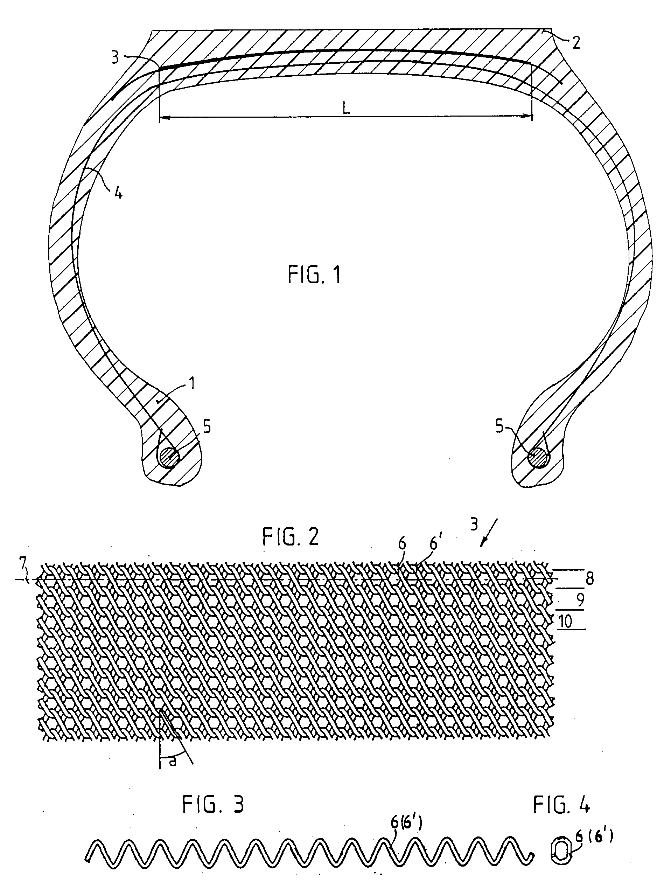

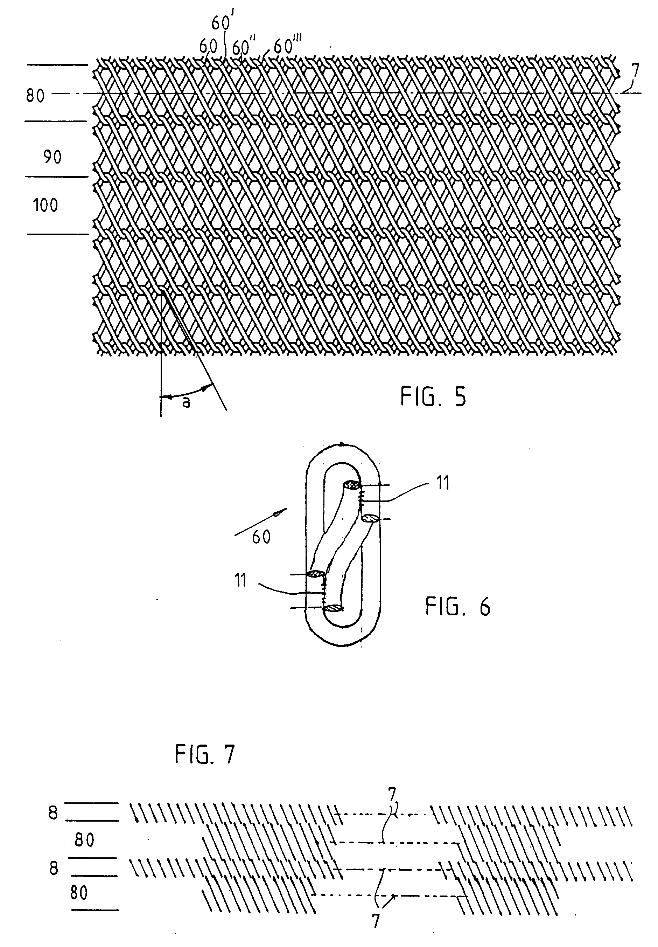

Nachstehend ist die Erfindung an Hand von in den Zeichnungen dargestellten Ausführungsbeispielen näher beschrieben. Dabei zeigen: Fig.1 den Querschnitt durch einen erfindungsgemäßen Reifen mit einem Gurt; Fig.2 die Draufsicht auf einen Teil eines aus Drahtwendeln bestehenden Gurtes, die Fig.3 und Fig.4 Ansichten in zwei zueinander senkrechten Richtungen auf eine einzelne Drahtwendel; Fig.5 eine der Fig.2 ähnliche Draufsicht auf einen aus viergängigen Gliedern bestehenden Gurt; Fig.6 in vergrößertem Maßstab eine der Fig.4 ähnliche Seitenansicht und Fig.7 in schematischer Darstellung einen Gurt, der aus Gliedern verschiedener Mehrgängigkeit und verschiedener Länge besteht.

Der in Fig.1 dargestellte Fahrzeugreifen besitzt einen Reifenkörper 1 mit einer Lauffläche 2. Innerhalb der Lauffläche 2 verläuft ein Gurt 3 und quer dazu eine Radialarmierung 4, die an Wulstringen 5 verankert ist.

Der Gurt 3 besteht gemäß Fig.2 aus Gliedern, die miteinander verbundene Drahtwendeln 6, 6′ aufweisen. Eine solche gewendelte Drahtwendel 6 oder 6′ ist in den Fig.3 und 4 dargestellt.

Die Längsachsen 7 der gewendelten Drahtelemente 6 und 6′ verlaufen quer zur Umfangsrichtung des Reifens. Durch die Verbindung der Drahtwendeln 6 bzw. 6′ entstehen nebeneinander liegende Glieder 8, 9, 10 usw., die miteinander der Länge nach verbunden sind und sich über die Breite des Reifens erstrecken. Im gezeichneten Ausführungsbeispiel nach Fig.2 sind die einzelnen Glieder zweigängig ausgebildet. Es wird demnach jedes Glied von je einer Drahtwendel 6 und einer Drahtwendel 6′ gebildet.

Bei der Ausführungsform nach Fig.5 hingegen wird jedes der Glieder 80, 90 und 100 von vier Drahtwendeln 60, 60′, 60˝ und 6‴ gebildet, jedes Glied ist demnach viergängig ausgebildet.

Wie ein Vergleich der Figuren 2 und 5 zeigt, ist der Steigungswinkel a bei beiden Ausführungsformen gleich. Es ist daher auch möglich, Glieder verschiedener Mehrgängigkeit miteinander zu verbinden, wie es in Fig.7 angedeutet ist. Dort ist jeweils ein Glied 8 mit einem Glied 80 verbunden, sodaß das den Gurt bildende Band aus nebeneinander liegenden Gliedern verschiedener Breite gebildet ist.

Die viergängigen Glieder 80 sind auch kürzer als die zweigängigen Glieder 8. Es sollen nämlich die Glieder 80 nur über die Laufflächenbreite L (Fig.1) reichen, wogegen die zweigängigen Glieder 8 darüber hinaus in den Krümmungsbereich des Reifens ragen. Die Glieder 8 können dadurch in Bereich des geringeren Umfangs des Reifens näher zueinander rücken.

In Fig.6 ist die Seitenansicht auf eine Drahtwendel 60 gezeigt. Es ist ersichtlich, daß die Drahtwendel 60 einen ellipsenähnlichen bzw. ovalen Querschnitt besitzt. Die beiden Drahtenden könnten, wie bei 11 angedeutet ist, mit dem anschließenden Bereich des Drahtes verschweißt, verlötet oder auch verklebt sein. Diese Maßnahme ist jedoch nicht unbedingt erforderlich, durch das Verbinden mit der daneben liegenden Drahtwendel und das anschließende Vergießen mit dem Reifenmaterial ist im Normalfall ein Ausweichen der Drahtenden nicht zu befürchten.

Im Rahmen der Erfindung sind zahlreiche Abänderungen möglich. So ist es keineswegs erforderlich, nur zweioder viergängige gewendelte Drahtelemente zu verwenden. Es wird vielmehr auf den erforderlichen Steigungswinkel bzw. auf den als notwendig erachteten Abstand der einzelnen Drähte ankommen, welche Mehrgängigkeit zu wählen ist. Auch könnte der Querschnitt der einzelnen Drahtelemente bei Beibehaltung der Steigung statt oval kreisrund sein. Eine solche Ausführungsform wäre besonders für die Glieder mit wenig Gängen vorteilhaft. Es ist ferner möglich, mehrere Bänder oder Lagen aus Drahtwendeln übereinander anzuordnen bzw. eine oder mehrere Lagen aus Drahtwendeln mit einem herkömmlichen Gurt aus Korden zu kombinieren.

## Patentansprüche

1. Fahrzeugreifen mit einem aus Elastomeren bestehenden Reifenkörper (1), in dem eine Armierung (4) eingebettet ist, einer Lauffläche (2) und einem darunter eingebetteten Gurt (3) mit ineinander greifenden Gliedern (8,9,10; 80,90,100), **dadurch gekennzeichnet**, daß der Gurt (3) aus länglichen, quer zur Umfangsrichtung des Reifens liegenden Drahtwendeln (6,6′;60,60′,60˝,60‴) besteht, die miteinander der Länge nach scharnierartig verbunden sind.

2. Fahrzeugreifen nach Anspruch 1, **dadurch gekennzeichnet**, daß die einzelnen Glieder (8,9,10;80,90,100) mehrgängig ausgebildet sind.

3. Fahrzeugreifen nach Anspruch 2, **dadurch gekennzeichnet**, daß Glieder (8,80) verschiedener Mehrgängigkeit abwechselnd miteinander verbunden sind.

4. Fahrzeugreifen nach Anspruch 3, **dadurch gekennzeichnet**, daß die Steigung (a) der Drahtwendeln nebeneinander liegender Glieder (8,80) gleich ist.

5. Fahrzeugreifen nach einem der Ansprüche 1 bis 4, **dadurch gekennzeichnet**, daß nebeneinander liegende Glieder (8,80) abwechselnd verschieden lang sind, wobei die kürzeren Glieder (80) nur über den Laufflächenbereich (L) des Reifens reichen.

6. Fahrzeugreifen nach Anspruch 5, **dadurch gekennzeichnet**, daß die kürzeren Glieder (80) mehrgängiger als die längeren Glieder (8) sind.

## Claims

1. Vehicle tyre with a tyre body (1) made of elastomers, in which a reinforcement (4) is embedded, with a tread (2) and a belt (3), embedded below and equipped with intermeshing links (8, 9, 10; 80, 90, 100), **characterized in that** the belt (3) consists of longitudinal wire coils (6, 6'; 60, 60', 60'', 60'''), positioned at right angles to the circumferential direction of the tyre and interlinked lengthwise according to the hinge principle.

2. Vehicle tyre according to Claim 1, **characterized in that** the individual links (8, 9, 10; 80, 90, 100) are multiple-threaded.

3. Vehicle tyre according to Claim 2, **characterized in that** variously multiple-threaded links (8, 80) are alternately connected to each other.

4. Vehicle tyre according to Claim 3, **characterized in that** the wire coils of links situated side by side (8, 80) have the same lead (a).

5. Vehicle tyre according to one of the Claims 1 to 4, **characterized in that** links (8, 80) situated side by side are alternately of different lengths, with the shorter links (80) protuding only over the tread zone (L) of the tyre.

6. Vehicle tyre according to Claim 5, **characterized in that** the shorter links (80) have a greater number of threads than the longer links (8).

## Revendications

1. Pneu pour véhicule avec un corps de pneu (1) d'élastomères dans lequel une armature (4) est incorporée, avec une bande d'usure (2) et une nappe (3), incorporée au-dessous, à des chaînons (8, 9, 10; 80, 90, 100) engrenés, **caracterisé en ce que** la nappe (3) est composée de fils en hélice (6, 6'; 60, 60', 60''. 60''') oblongs, situés en travers de la direction circonférentielle du pneu et liés l'un à l'autre longitudinalement comme des charnières.

2. Pneu de véhicule selon revendication 1, **caracterisé en ce que** les chaînons (8, 9, 10; 80, 90, 100) individuels se distinguent par un filetage multiple.

3. Pneu de véhicule selon revendication 2, **caracterisé en ce que** des chaînons (8, 80) à des filets multiples divers sont liés alternativement l'un à l'autre.

4. Pneu de véhicule selon revendication 3, **caracterisé en ce que** les fils en hélice des chaînons (8, 80) arrangés côté à côté présentent des pas différents.

5. Pneu de véhicule selon l'une des revendications 1 à 4, **caracterisé en ce que** des chaînons (8, 80) situés côté à côté se distinguent par leur longueur qui varie alternativement, et que les chaînons plus courts (80) saillissent de la nappe (L) du pneu seulement.

6. Pneu de véhicule selon revendication 5, **caracterisé en ce que** les chaînons plus courts (80) présentent un nombre de filets plus grand que les chaînons plus longs (8).
